# EUROPEAN PATENT APPLICATION

(11) **EP 1 939 262 A1**
(43) Date of publication of application: **02.07.2008**
(21) Application number: 06798430.2
(22) Date of filing: 28.09.2006
(51) Int. Cl.: C09J 5/00, B32B 27/00, B32B 27/30, C09J 201/00

(54) **METHOD OF AFFIXATION, AND PRESSURE-SENSITIVE ADHESIVE FOR USE IN AFFIXATION**

(30) Priority: 29.09.2005 JP 2005285701; 27.09.2006 JP 2006263648
(71) Applicant: Kokuyo S&T Co.,Ltd., Osaka-shi, Osaka 537-8686 (JP)
(72) Inventor: KASAHARA, Hiroyuki, Osaka-shi, Osaka 537-8686 (JP); KAWASHITA, Kazushige, Osaka-shi, Osaka 537-8686 (JP); KISHIMOTO, Koji, Osaka-shi, Osaka 5378686 (JP); URAHAMA, Yoshiaki, Osaka-shi, Osaka 537-8686 (JP)
(74) Representative: Uchida, Kenji
(86) International application number: PCT/JP2006/319382
(87) International publication number: WO 2007/037345

(57) **Abstract**

A pressure-sensitive adhesive is provided that can efficiently manufacture a laminate by as simple operation as possible without incurring deterioration in the environment. Also, a pressure-sensitive adhesive is provide that can repeat affixing and peeling operations and facilitates positioning.

The pressure-sensitive adhesive is constituted at least by one or two kinds or more of a polymer and a tackifier, said polymer is selected from the polymer obtained by polymerizing olefin unsaturated-group containing polymerizable monomer by an ordinary method, a copolymer obtained by copolymerizing a monomer mixture containing two or more types of olefin unsaturated-group containing polymerizable monomer by an ordinary method, and natural rubber, wherein said pressure-sensitive adhesive for available affixation has substantially no initial tack value and exerts adhesion by pressurization processing.

## Description

### Technical field

The present invention relates to a method for affixing an article provided with a layer of a new adhesive (hereinafter referred to as pressure-sensitive adhesive) which exerts adhesiveness when being pressed regardless of substantially no or extremely small initial tack and a method for manufacturing a laminate having the pressure-sensitive adhesive layer. Also, the present invention relates to a pressure-sensitive adhesive available for affixation, an adhesive product and a laminate having the pressure-sensitive adhesive. Particularly, the present invention relates to a new pressure-sensitive adhesive available for affixation having substantially no or extremely small initial tack and exerts adhesion when being pressurized, constituted at least by one or two or more kinds of polymer compound and a tackifier, and said polymer is selected from the polymer obtained by polymerizing an olefin unsaturated-group containing polymerizable monomer and natural rubber, relates to an adhesive product and a laminate having the pressure-sensitive adhesive.

### Background Art

An art of manufacturing a decorative laminate or partition board constituted by a laminate in which decorative materials are laminated on the surface of a core made of an arbitrary material has been put into practice for a long time, and many studies and reports have been made. Also, study reports on an art of manufacturing adhesive products such as sliding screen sheet, decorative sheet, label, saddlecloth and the like have been made.

In the above laminate, studies have been made on an adhesive for affixing and fixing materials constituting the laminate to each other, and adhesives made of phenol resin, urea resin and the like, for example, have been studied and used. However, a problem is pointed out that use of those adhesives incur deterioration of the environment.
In that regard, vinyl resin adhesives such as vinyl acetate adhesive can avoid the problem of deterioration of the environment but a problem in workability is pointed out.

In the case of the above adhesive products, many products have acrylic pressure-sensitive adhesives, but with those products, the surface of the adhesive is sticky and the adhesive surface should be protected by a separation sheet. Moreover, once the separation sheet is peeled off, if the adhesive product is to be bonded at a predetermined portion, repeated affixation and separation are difficult and if positioning should be made accurately, the affixation work is difficult. In that regard, with use of a hot-melt type adhesive, workability such as positioning is improved, but there is a need of an adhesion operation using a heating instrument such as an iron, which raises costs.
As an art to avoid the heating operation, an art of forming a pressure-sensitive adhesive layer by light curing is reported (Patent Document 1), however, with that art, an expensive light irradiating instrument should be prepared and moreover, a scope of application is limited, which is a problem.

[Patent Document 1] Japanese Patent Laid-Open No. 2002-251140

### Disclosure of the Invention

Therefore, an object of the present invention is to provide a method for affixing an article on a surface of a different article with a simple affixing operation without a need of any particular expensive instrument. Also, the present invention has an object to manufacture a laminate with a simple affixing operation without a need of any particular expensive instrument. Moreover, the present invention has an object to provide a pressure-sensitive adhesive that can manufacture a laminate efficiently with an operation as simple as possible without incurring deterioration of the environment. Still further, the present invention has an object to provide a pressure-sensitive adhesive that is capable of repeated operation of affixing and peeling off and facilitates positioning and the like.

The inventors have focused attention to a resin mixture with substantially no initial tack, wherein the resin mixture constituted at least by a polymer compound and a tackifier, and has been regarded as impossible to be used as a pressure-sensitive adhesive and removed from subjects of research without drawing attention during devoted research for solving the above problem. As the result of selection of a specific resin mixture from the above-described resin mixture and an attempt to transfer it to the surface of a cloth and to bond / fix the cloth to a ply board, the inventors have obtained a surprising finding that even after the operation to peel the cloth off the ply board and to bond the cloth to the ply board repeatedly several times, if the cloth is pressed onto the ply board, the cloth is bonded to the ply board easily to the surprise of the inventors, and the adhesion strength is reinforced as time elapses and the cloth can be bonded to the ply board firmly. Then, based on the finding, the inventors have made all efforts and finally achieved the present invention.

That is, an invention in claim 1 is a method for affixing an article provided with a pressure-sensitive adhesive layer on its surface, characterized in that a pressure-sensitive adhesive layer constituted at least by a polymer compound and a tackifier, having substantially no or extremely small initial tack and exerting adhesion by pressurization processing, is provided on a surface of an arbitrary article, wherein the provided pressure-sensitive adhesive layer is brought into contact with a surface of another article and pressed. Here, the method of pressurization is not particularly limited, and it can be any method as long as the article having the pressure-sensitive adhesive layer is affixed to another article. Also, the pressure-sensitive adhesive layer may be provided on the entire surface of the article or a part of the surface of the article.
An invention of claim 2 is a pressure-sensitive adhesive constituted at least by one or two kinds or more of polymer compound and a tackifier and moreover, and said polymer compound is selected from the polymer obtained by polymerizing an olefin unsaturated-group containing polymerizable monomer and natural rubber, wherein the pressure-sensitive adhesive available for affixation is characterized by having substantially no or extremely small initial tack and exerting adhesion when being pressurized. Also, it is a pressure-sensitive adhesive available for affixation characterized by being constituted at least by the polymer compound and tackifier and moreover, the pressure-sensitive adhesive has an initial tack at a room temperature by the probe tack method of 0.2 N/mm² or less and exerts adhesion by pressurization processing and its adhesion is 6 N/25 mm or more. The polymerizable monomer includes a polymerizable oligomer obtained by polymerizing approximately 20 monomers or less in advance.
An invention of claim 3 is a pressure-sensitive adhesive available for affixation constituted at least by a (metha)acrylic polymer and tackifier and is characterized in that the initial tack of the (metha)acrylic polymer at a room temperature by the probe tack method is 0.2 N/mm² or less and the adhesion is 9 N/25 mm or more. The pressure-sensitive adhesive available for affixation with the initial tack at a room temperature by the probe tack method of 0.04 N/mm² or less and the adhesion of 9 N/25 mm or more is more preferable. A mixture of two or more kinds of polymers belonging to the (metha)acrylic polymer may be used. An invention of claim 4 is a pressure-sensitive adhesive available for affixation constituted at least by a hydrocarbon polymer and tackifier and is characterized in that the initial tack at a room temperature by the probe tack method of the hydrocarbon polymer is 0.04 N/mm² or less and the adhesion is 6 N/25 mm or more. A mixture of two or more kinds of polymers belonging to the hydrocarbon polymer may be used.
An invention of claim 5 is characterized in that, in the invention of claim 3, the (metha)acrylic polymer is one or two kinds or more selected from (metha)acrylic block copolymer and (metha)acrylic copolymer and hydrocarbon block copolymer. A mixture of two or more kinds of polymers belonging to the (metha)acrylic polymer may be used. An invention of claim 6 is characterized in that, in the invention of claim 4, hydrocarbon polymer is hydrocarbon block copolymer. A mixture of two or more kinds of polymer belonging to the hydrocarbon block copolymer may be used.
An invention of claim 7 is characterized in that, in the invention of claims 2 to 6, the tackifier is one or two kinds or more selected from rosin, rosin derivatives, terpene resin, petroleum resin, and phenol resin. In the present invention, the tackifier may be mixed in 20 to 250 weight parts based on 100 weight parts of the polymer.
An invention of claim 8 is a method for manufacturing a laminate comprising at least a step of providing a layer of a pressure-sensitive adhesive described in any one of claims 2 to 6 on a surface of an article and a step of bringing the pressure-sensitive adhesive layer into contact with another article and pressurizing them. Here, the pressure-sensitive adhesive layer may be provided in advance on the surface of another article. In this invention, the pressure-sensitive adhesive layer may be provided on the entire surface of the article or may be provided only on a part of the surface of the article.
An invention of claim 9 is an invention relating to a laminate characterized by having a pressure-sensitive adhesive layer described in any one of claims 2 to 6. An invention of claim 10 relates to an adhesive product characterized by having a pressure-sensitive adhesive layer described in any one of claims 2 to 6, and in these inventions, the pressure-sensitive adhesive layer may be a continuous single layer or a discontinuous layer, or a pressure-sensitive adhesive may be provided partially. The laminated body may be a laminated body in a double-layered structure or a laminated body with three layers or more.
The present invention is also an invention of a method for affixing the article described in claim 1 characterized in that the pressure-sensitive adhesive is any one described in claims 2 to 6.

The present invention will be described below in detail.
One of distinctive features of the present invention is a method for affixing an arbitrary article using a new adhesive. By this method, workability is improved and firm adhesion of an object to be affixed is realized. The new adhesive also has a distinctive feature. That is, the adhesive is a new pressure-sensitive adhesive that has substantially no or extremely small initial tack and exerts adhesion when being pressurized and performs a function similar to the conventional art or more. A known pressure-sensitive adhesive has an initial tack, and a mixture having substantially no or extremely small initial tack is considered not to perform a function as the pressure-sensitive adhesive and disposed of, for example. In this regard, the pressure-sensitive adhesive of the present invention is new and innovative.
Here, when a state where there is substantially no or extremely small initial tack is described by the probe tack method, it is a state where the initial tack of the pressure-sensitive adhesive by the probe tack method at a room temperature is 0.2 N/mm² or less. A lower limit value is a value as close to 0 N/mm² as possible and described as 0 N/mm² here. The state where there is substantially no or extremely small initial tack means a state of approximately 5 or less in a rolling ball tack test by JIS Z0237-2000 and moreover, it can be described as a state of approximately 2 or less. The usual pressure-sensitive adhesive used so far has a so-called sticky adhesion surface and its initial tack value by the ball tack test is approximately 10 or more. Alternatively, it may be described as a state that the surface of the pressure-sensitive adhesive is not so-called sticky when contacted with a finger or a state where a feeling of slight stickiness is obtained.

The pressure-sensitive adhesive of the present invention has substantially no or extremely small initial tack but exerts adhesion upon pressurization processing. This point is also discovered by the present invention for the first place. A degree of pressurization in the pressurization processing is not particularly limited and it may be a degree of pressurization used in a usual adhesion operation. Also, means for pressurization is not particularly limited.
The adhesion is fluctuated by a polymer component of the pressure-sensitive adhesive and a constituent component of the tackifier, and the tack strength is also fluctuated by a type of used pressure-sensitive adhesive, thickness of the pressure-sensitive adhesive, degree of pressurization, time for which the pressure-sensitive adhesive is pressed on an object to be affixed and the like and can not be uniformly specified, but a numeral value at a peel adhesion test at 180 degrees is 6 N/25 mm or more, for example. The higher an upper limit value is the better and not particularly limited. It changes according to progress of the art and the highest value developed at the time is the upper limit value. The above numeral is a value measured after a 2-kg-roll is given pressurization processing for 5 times back and forth and left for 20 to 40 minutes (in compliance with JIS Z0237-2000, but the pressurization degree is set slightly higher).

The pressure-sensitive adhesive is constituted at least by one or two kinds or more of polymer compound and a tackifier, and the polymer is selected from the polymer obtained by polymerizing an olefin unsaturated-group containing polymerizable monomer. It may be a pressure-sensitive adhesive constituted at least by one or two kinds or more of polymer compound selected from regenerated rubber, polyester such as poly(lactic acid), urethane polymer, and silicon polymer, and a tackifier.
The polymer obtained by polymerizing an olefin unsaturated-group containing polymerizable monomer includes a polymer obtained by polymerizing a single type of olefin unsaturated-group containing polymerizable monomer and a copolymer obtained by copolymerizing a monomer mixture containing two kinds or more of olefin unsaturated-group containing polymerizable monomer. The polymer is obtained by polymerizing a mixture containing at least olefin unsaturated-group containing polymerizable monomer or a mixture containing at least two or more kinds of olefin unsaturated-group containing polymerizable monomer by an ordinary method.
The olefin unsaturated-group containing polymerizable monomer means a monomer containing olefin unsaturated bond in a molecule and capable of polymerization and is a known monomer. Here, the olefin unsaturated-group containing polymerizable monomer includes conjugated diene monomer.
The polymerizable monomers include, for example, monomers of unsaturated hydrocarbon monomer such as styrene, methyl styrene, t-butyl styrene, 2,4,6-trimethyl styrene, monochlorostyrene, dichlorostyrene, monofluorostyrene, difluorostyrene, methoxystyrene, indene, butadiene, isoprene, isobutylene, ethylene, propylene and the like, vinyl ester such as vinyl acetate, vinyl propionate, vinyl butyrate and the like, (metha)acrylic acid ester such as methyl (metha)acrylate, ethyl (metha)acrylate, propyl (metha)acrylate, butyl (metha)acrylate, pentyl (metha)acrylate, hexyl (metha)acrylate, cyclohexyl (metha)acrylate, (metha)acrylic acid 2-ethylhexyl, octyl (metha)acrylate, isooctyl (metha)acrylate, decyl (metha)acrylate, dodecyl (metha)acrylate, myristyl (metha)acrylate, palmityl (metha)acrylate, stearyl (metha)acrylate, benzyl (metha)acrylate, phenyl (metha)acrylate, methoxyethyl (metha)acrylate, N, N'-dimethylaminoethyl (metha)acrylate, trifluoroethyl (metha)acrylate, tetrafluoropropyl (metha)acrylate, ethylene glycol diacrylate, neopentyl glycol diacrylate, polypropylene glycol diacrylate and the like, (metha)acrylamide such as (metha)acrylamide, N-isopropylacrylamide, N-butoxymethylacrylamide, N-dimethyl (metha)acrylamide and the like, vinyl ether such as vinylmethylether, vinylethylether and the like. Also, halogen-atom containing unsaturated monomer such as chloroprene, vinyl chloride, vinylidene chloride and the like, nitrogen-atom containing unsaturated monomer such as N-phenylmaleimide, N-cyclohexylmaleimide, N-vinyl pyridine, acrylonitrile, N-vinylimidazol, N-vinyl pyrolidone, isopropenyl oxazoline and the like, unsaturated monomer having a carboxyl group such as (metha)acrylic acid, crotonic acid, maleic acid, maleic anhydride, fumaric acid and the like, silicon-atom containing unsaturated monomer such as γ-methcryloyloxypropyltrymethoxysilane, epoxy-group containing unsaturated monomer such as glycidyl (metha)acrylate, α-methylglycidyl (metha)acrylate and the like, component derived from a monomer such as lactone such as γ-caprolactone, valerolactone and the like, and monomer such as 4-(metha)acryloyloxy-2,2,6,6-tetramethylpiperidine, 4-(metha)acryloyloxy-1,2,2,6,6-pentamethylpiperidine and the like may be cited, and moreover, it may be oligomer in which approximately 2 to 20 of those monomers are polymerized. Also, it may be a monomer having a functional group such as hydroxyl group.
The above monomer may be used singularly or two or more kinds may be combined for use.
Among them, unsaturated hydrocarbon monomer or (metha)acrylic-group containing monomer is preferable and vinyl aromatic monomer such as styrene, methyl styrene, t-butyl styrene, 2,4,6-trimethyl styrene, monochlorostyrene, dichlorostyrene, monofluorostyrene, difluorostyrene, methoxystyrene and the like, diene monomer such as butadiene, isoprene and the like, unsaturated hydrocarbon monomer such as unsaturated olefin with carbon number of 4 to 5, and (metha)acrylic-group containing monomer such as unsaturated monomer containing the above (metha)acrylic acid ester and (metha)acrylic group are preferable. Another monomer with an amount in a range to achieve the object of the present invention may coexist with these monomers.

The above polymerizable monomer or oligomer is polymerized or copolymerized by an ordinary method so as to prepare a polymer or copolymer. The preparing method is not particularly limited as long as the polymer or copolymer resulting in the pressure-sensitive adhesive of the present invention can be obtained. Catalysts, polymerization solvents, polymerization agents for coexistence, and additives are not particularly limited and polymerization conditions are not particularly limited, either.
In polymerization of the monomer components, a usually used radical polymerization initiator is preferably used. The radical polymerization initiator is not particularly limited but includes organic peroxide polymerization initiator, azo polymerization initiator and the like, for example. The organic peroxide polymerization initiator specifically includes benzoyl peroxide, di-tert-butyl peroxide, cumene hydroperoxide, tert-butyl peroxybenzoate and the like. The azo polymerization initiator specifically includes 2,2'-azobis (2-methylbutyronitril), 2,2'-azobiscyclohexanecarbonitril and the like. Only one kind may be used or two or more kinds of polymerization initiator may be used at the same time.
The prepared polymer or copolymer is not limited as long as the desired object can be achieved, and the polymer or copolymer may be used singularly or two or more types may be used at the same time.

The copolymer may be any one of random, block or graft copolymer. Its molecular weight is preferably in a range of 10 thousands to 1 million in weight-average molecular weight. The weight-average molecular weight is a polystyrene-converted value measured by the Gel Permeation Chromatography (GPC) method.

In the present invention, natural rubber may be used as a component of the pressure-sensitive adhesive as long as the initial object can be achieved. That is, the natural rubber having substantially no or extremely small initial tack may be used. The natural rubber with this property can be easily obtained by purchasing product on the market.

Among the block copolymers, the (metha)acrylic block copolymer and hydrocarbon block copolymer are particularly preferable.
The preferable (metha)acrylic block copolymer may be a block copolymer expressed as a formula (A - B) m - C (in the formula, A and B represent (metha)acrylic polymer blocks with different structures, respectively, and at least one of them is alkyl ester acrylate and / or alkyl ester methacrylate unit, C may have the same structure as A or different structure, and m represents an integer of 1 to 30). As the polymerizable monomer constituting each block, a polymerizable monomer outside the above specified range may be used at the same time as long as in small quantity that can achieve the desired object of the present invention and would not spoil the advantage of the present invention. In the present invention, it is particularly advantageous if m = 1 and triblock copolymer with the same structure as A is used for C.

In the present invention, the triblock copolymer and diblock copolymer are preferably mixed. Ratio in quantity of the mixture is not particularly limited but it may be 30 to 200 weight parts of diblock copolymer based on 100 weight parts of triblock copolymer.
The diblock copolymer is exemplified by a diblock copolymer of (metha)acrylic copolymer constituted by "hard block" and "soft block".

A method for preparing the triblock copolymer or the diblock copolymer is not particularly limited as long as the block copolymer resulting in the pressure-sensitive adhesive of the present invention is obtained, but a representative method is living polymerization of a monomer constituting each block.

As the acrylic copolymer in the present invention, a (metha)acrylic copolymer obtained by copolymerizing two kinds or two or more kinds of (metha)acrylic monomers can be exemplified. That is, it can be manufactured by polymerization of a mixture of (metha)acrylic acid ester having alkyl group with the carbon number of 4 to 12 as a main component and another (metha)acrylic monomer as a small-quantity component by a known method. As the small-quantity component monomer, (metha)acrylic acid ester having alkyl group with the carbon number of 3 or less, (metha)acrylic monomer having (metha)acrylic acid or functional group and the like can be exemplified.

The method of preparing the acrylic copolymer is not particularly limited as long as the acrylic copolymer resulting in the pressure-sensitive adhesive of the present invention can be obtained, but a representative method includes a method of polymerizing solution of each monomer.

The hydrocarbon block copolymer is preferably a block copolymer made of a vinyl aromatic monomer block polymer and a diene block polymer such as isoprene polymer block, butadiene polymer block and the like but not limited to them.
Among the block copolymers, a triblock copolymer expressed by (X - Y) n - Z (in the formula, X represents vinyl aromatic monomer block polymer and Y for diene block polymer, and Z is vinyl aromatic monomer block polymer, which may be either the same as or different from X, and n represents an integer of 1 to 30) is preferable. A number-average molecular weight of the entire triblock copolymer is preferably in a range of 10,000 to 800,000. The number-average molecular weight of the polymer block made of vinyl aromatic monomer is preferably in a range of 2,500 to 400,000, and the number-average molecular weight of the diene block polymer is preferably in a range of 10,000 to 400,000. In the block copolymer, a ratio of structural unit from the vinyl aromatic monomer and the structural unit from isobutylene is preferably 5/95 to 80/20 and more preferably 10/90 to 75/25 by weight.

Alternatively, a diblock copolymer constituted by polymer block made from the above vinyl aromatic monomer and diene block polymer may coexist. The number-average molecular weight of the diblock copolymer is preferably in a range of 5,000 to 400,000, respectively.

A method for preparaing the triblock copolymer and diblock copolymer is not particularly limited as long as a block copolymer resulting in the pressure-sensitive adhesive of the present invention can be obtained, but it can be prepared by polymerizing vinyl aromatic monomer and isobutylene in an inactive solvent to form the respective block bond sequence using an appropriate polymerization initiator, for example.

The tackifier can adjust the adhesion and holding force of the pressure-sensitive adhesive of the present invention in a balanced manner, which gives a large influence on its property.
The tackifier is roughly divided into natural resins and synthetic resins, in which the natural resins include rosin, rosin derivaties such as gumrosin, tall oil rosin, rosin ester, hydrogenated rosin, maleinated rosin and the like, terpene phenol resin, terpene resin having α-pinene, β-pinene limonene as a main component, and aromatic hydrocarbon modified terpene resin. The synthetic resin tackifiers include aliphatic petroleum resins, alicyclic petroleum resins, aromatic petroleum resins, cumarone / indene resin, styrene resin, phenol resin such as alkyl phenol resin, rosin modified phenol resin and the like, xylene resin and the like. When the tackifier resin is to be mixed, one or two kinds or more of the above tackifier resin can be mixed.
Among them, rosin, rosin derivatives, phenol resin, terpene phenol resin, petroleum resin and the like are preferably used particularly for (metha)acrylic polymer, while, terpene phenol resin, rosin resin, petroleum resin and the like are preferably used for the hydrocarbon polymer. However, they are not limiting.

A mixed amount of the tackifier resin changes depending on the type of the tackifier resin, coexisting polymer, use of the pressure-sensitive adhesive, type of the object to be affixed and the like and can not uniformly specified, but approximately 20 to 250 weight parts of the tackifier resin can be mixed with respect to 100 weight parts of the polymer component, for example. More specifically, approximately 20 to 250 weight parts of the tackifier resin can be mixed with respect to 100 weight parts of (metha)acrylic polymer component and approximately 20 to 70 weight parts of the tackifier resin is preferably mixed with respect to 100 weight parts of hydrocarbon polymer component.

In the present invention, a required amount of a compounding agent conventionally used in the field of the pressure-sensitive adhesive may be added in advance as long as the desired object is not spoiled.
The compounding agents include plasticizer, filler and the like.

The plasticizer includes process oil such as paraffin process oil, naphthene process oil, aromatic process oil and liquid polymer with plasticizing capacity liquid polymer such as phthalic acid diester plasticizer, hydrogenated substance of liquid polyisoprene, liquid polybutene and the like, for example.
The filler exemplifies inorganic filler such as talc, calcium carbonate, kaolin, titanium oxide and the like.

The pressure-sensitive adhesive of the present invention can be easily prepared by mixing the polymer and tackifier under coexistence of solvent, but the method is not limiting and the pressure-sensitive adhesive can be prepared by applying a known method. The pressure-sensitive adhesive may be applied as it is onto the surface of an object to be affixed such as a core material or a decorative cloth, but a method that the adhesive is applied on the surface of a support given release processing in advance, dried and then the pressure-sensitive adhesive is transferred to the surface of the object to be affixed from the support may be applied. The pressure-sensitive adhesive layer formed on the surface of the support may be in a continuous state or in a discontinuous state.
A particularly preferable pressure-sensitive adhesive of the present invention is a pressure-sensitive adhesive constituted at least by the polymer and tackifier and has the initial tack value of substantially 0.

The present invention is also an affixing method using the pressure-sensitive adhesive. That is, the pressure-sensitive adhesive is provided on the surface of an arbitrary article, the pressure-sensitive adhesive layer is brought into contact with another different article, and pressurization processing is applied using a known method / means so that the article having the pressure-sensitive adhesive can be affixed to the another article. The article is anything as long as the pressure-sensitive adhesive layer can be provided and not particularly limiting. When the pressure-sensitive adhesive layer is brought into contact with the another article, since the pressure-sensitive adhesive layer is not sticky, the adhesion operation is extremely easy and workability is also improved.
Also, the pressure-sensitive adhesive of the present invention can be provided on the surface of an arbitrary article, and the article may be an arbitrary product such as a label, saddlecloth, various slips, sliding screen sheet and the like. For example, in the case of a label on which information is printed on the surface, the pressure-sensitive adhesive of the present invention is provided on the front face or a part on the side opposite the base material of the label on which information is printed. A separation sheet for protecting the adhesive surface may be further provided but does not have to be provided. A user who obtained this label peels off the separation sheet if the separation sheet is provided or presses it as it is on a desired portion if the separation sheet is not provided, by which the label is easily affixed. The affixed label does not peel off easily but can be peeled off easily by a human force. Since the pressure-sensitive adhesive of the present invention has a property that if the adhesive is left as it is, the adhesive adheres firmly in the end, and handling according to the use purpose of the label can be embodied.
A method for applying the pressure-sensitive adhesive of the present invention on the surface of an object to be affixed is not particularly limited but an optimal method may be selected as appropriate according to the nature of the object to be affixed, placed location, environment and the like. The pressure-sensitive adhesive layer may be provided on the entire surface of the article or may be provided only a part of the surface of the article.

The present invention is also a method for manufacturing a laminate using the pressure-sensitive adhesive. That is, the laminate can be obtained by a process of providing the pressure-sensitive adhesive on the surface of an arbitrary article, bringing the pressure-sensitive adhesive layer into contact with another different article and pressurization processing using a known method / means. It is only necessary that the article is capable of provision of the pressure-sensitive adhesive layer and not particularly limited. When the pressure-sensitive adhesive layer is brought into contact with another different article, since the pressure-sensitive adhesive layer is not sticky, the operation of manufacturing the laminated body is extremely easy and workability is also improved.
A method for applying the pressure-sensitive adhesive of the present invention onto the surface of the object to be affixed is not particularly limited, and an optimal method may be selected as appropriate according to the nature of the object to be affixed, placed location, environment and the like. The pressure-sensitive adhesive layer may be provided on the entire surface of the article or may be provided only a part of the surface of the article.
The pressure-sensitive adhesive of the present invention is preferably used when a decorative material, reinforcing material and any other materials having respective specific objects / functions are laminated on one face or both faces of an arbitrary core material, for example. Also, the pressure-sensitive adhesive of the present invention is used when a laminated body is manufactured. Specifically, various mounts such as cardboard, decorative paper to be affixed on them, photographic printing paper, documents, books and protective cover film provided on the surface thereof and the like are exemplified. The material, shape of the core material are not particularly limited and wooden materials such as ply board, laminated wood, steel plate, aluminum plate and the like are exemplified, and the shape is not particularly limited such as a continuous body or a material having a partial space. The material and shape of the material to be laminated on the core material is not particularly limited, either, and can be selected so that the respective specific objects / functions are satisfied. For example, it may be a material having a discontinuous body or a curved surface.
As the decorative material or reinforcing material, decorative paper, decorative cloth, decorative resin sheet, board made of various inorganic materials, various glass products and the like can be exemplified but they are not limiting.

The pressure-sensitive adhesive of the present invention is a pressure-sensitive adhesive that has substantially no or extremely small initial tack and exerts adhesion by pressurization, and if a decorative cloth provided with the pressure-sensitive adhesive is to be arranged on a predetermined position of a core material, since there is little so-called stickiness, the operation to arrange the pressure-sensitive adhesive at a predetermined position on an object to be affixed is extremely easy and moreover, the adhesive has a property that even after the decorative cloth is arranged on the predetermined position of the core material once, if the arrangement location on the decorative cloth is determined as inappropriate, the decorative cloth can be easily changed to an appropriate location again. Furthermore, if the decorative cloth is pressed by arbitrary means, the decorative cloth is firmly affixed onto the surface of the core material and moreover, the decorative cloth adheres to the surface of the core material firmly as time elapses, and the decorative cloth will not peel off easily.
If the pressure-sensitive adhesive of the present invention is applied, so-called blister caused when the decorative cloth is turned up or peeled off does not occur. Moreover, a label, saddlecloth and the like can be used repeatedly for a period longer than those using a conventional pressure-sensitive adhesive.
By means of the present invention, a laminated body such as decorative material with excellent appearance can be produced with a simple operation.
Best Mode for Carrying Out the Invention

The present invention will be described below in detail based on embodiments. However, the present invention is not limited by the following embodiments. The units such as % and part mean weight % and weight part below, respectively, unless otherwise specified.

### (Example 1) Preparation of pressure-sensitive adhesive

100 weight parts of acrylic block copolymer mixture (LA2140: Kuraray Co., Ltd), 100 weight parts of acrylic block copolymer (LA1114e: Kuraray Co., Ltd), and 200 weight parts of rosin ester tackifier (SuperEster A 125 : ARAKAWA CHEMICAL INDUSTRIES, LTD.) are solved in 400 weight parts of toluene, applied to coat polyethyleneterephthalate film, and toluene is dried and removed so that the pressure-sensitive adhesive is obtained. In the following embodiments, an amount of toluene used is the same as that of resin constituting the pressure-sensitive adhesive unless otherwise specified.

### (Example 2) Preparation of pressure-sensitive adhesive

Instead of 200 weight parts of rosin ester tackifier (A125), the same tackifier is used in 300 weight parts and the operation similar to Example 1 except the above is carried out so as to prepare the pressure-sensitive adhesive.

### (Test example 1)

The toluene solution in Example 1 is applied to coat a surface of a glass plate with a thickness of 1.3 mm so that the thickness after being dried becomes 40 µm and dried so that a pressure-sensitive adhesive layer is formed. The pressure-sensitive adhesive is used as the following measurement sample.
The toluene solution in Example 2 is similarly manipulated, and the obtained pressure-sensitive adhesive is used as the following measurement sample.

### Measurement of initial tack (probe tack)

In compliance with ASTM D 2979, the probe tack is measured. The measurement result is shown in Table 1 below.
Used probe, diameter 5 mm
Measured load: 19.6 g / 5 mmΦ (1.0 N/cm²)
Contact time: 1 second
Separation speed: 10 mm/sec
Measurement instrument: Probe Tack Tester TE-600-D (by TESTER SANGYO CO., LTD.)

### Measurement of adhesion

In compliance with JISZ0237-2000, 180-degree peeling adhesion (hereinafter, referred to as peel strength) is measured. The measurement result is shown in Table 1 below.
Temperature: (23 ± 2) °C
Relative humidity: (50 ± 5) %
Pressurization condition: Reciprocating 5 times with 2-kg roller
Time being left: 20 to 40 minutes
Tracting speed: 300 mm/min
Sample width: 8.4 mm or 25 mm

### (Test example 2) Measurement of initial tack (rolling ball tack)

The pressure-sensitive adhesive in Example 1 and Example 2 is used as a measurement sample, and initial tack is measured by the rolling ball tack method (hereinafter referred to as inclined ball tack method) in compliance with JIS Z0237-2000. The measurement result is shown in Table 1 below.

### (Test example 3) Measurement of initial tack (finger tack)

A thumb is pressed onto the surface of the pressure-sensitive adhesive in Example 1 and Example 2, and a feeling of resistance when the thumb is peeled off is given sensory evaluation by two panelists according to the reference items below. The evaluation result is shown in Table 1 below.

### Reference items

1. Slight or little tack
2. Tack slightly weaker than that of adhesive cellophane tape
3. The same tack as that of adhesive cellophane tape
4. Tack slightly stronger than that of adhesive cellophane tape
5. Tack stronger than that of adhesive cellophane tape

**Table 1**

| No. | Probe tack value | Peel strength | Inclined ball tack | Finger tack |
|---|---|---|---|---|
| Example 1 | 0.04 | 9.3 | Less than 2 | 1 |
| Example 2 | 0.01 | 9.7 | Less than 2 | 1 |

The unit of probe tack value is (N/mm²) (the same applies to the following). The unit of peel strength is N/25 mm (the same applies to the following, unless otherwise specified). The numeral value in the column of finger tack is an average value of panelists (the same applies to the following).

### (Examples 3 to 6) Preparation of pressure-sensitive adhesive

An amount of the polymer and an amount of the tackifier described in Table 2 are processed similarly to Example 1 and the pressure-sensitive adhesive is obtained.

**Table 2**

| No. | Polymer | | Tackifier | |
|---|---|---|---|---|
| | Type | Quantity | Type | Quantity |
| Example 3 | LA | 60 | Sumilite resin | 40 |
| Example 4 | LA | 50 | Sumilite resin | 50 |
| Example 5 | LA | 60 | Tamanol 901 | 40 |
| Example 6 | LA | 50 | Tamanol 901 | 50 |

In Table, LA refers to a mixture of equal parts (weight) of LA2140 and LA114e, Sumilite resin is a phenol resin tackifier (by SUMITOMO BAKELITE Co., Ltd.), and Tamanol 901 is a terpene phenol resin tackifier (by ARAKAWA CHEMICAL INDUSTRIES, LTD.).

Using the toluene solution in Examples 3 to 6, a layer of the pressure-sensitive adhesive is formed by the method similar to Text example 1 to be the measurement sample of the initial tack (probe tack) and adhesion. The measurement result is shown in Table 3.

**Table 3**

| No. | Probe tack value | Peel strength | Inclined ball tack | Finger tack |
|---|---|---|---|---|
| Example 3 | 0.01 | 17.1 | - | 1 |
| Example 4 | 0.01 | 9.6 | - | 1 |
| Example 5 | 0.04 | 16.9 | Less than 2 | 1.5 |
| Example 6 | 0.01 | 9.6 | Less than 2 | 1 |

The symbol "-" in the column for inclined ball tack represents no measurement.

### (Examples 7 to 13) Preparation of pressure-sensitive adhesive

The amount of polymer and the amount of tackifier described in Table 4 are processed similarly to Example 1 and the pressure-sensitive adhesive is obtained.

**Table 4**

| Example No. | Polymer | | Polymer | | Tackifier | |
|---|---|---|---|---|---|---|
| | Type | Quantity | Type | Quantity | Type | Quantity |
| Example 7 | LA2140 | 100 | LA1114e | 100 | A115 | 200 |
| Example 8 | LA2140 | 100 | LA1114e | 100 | A115 | 220 |
| Example 9 | LA2140 | 100 | LA1114e | 100 | A115 | 240 |
| Example 10 | LA2140 | 120 | LA1114e | 80 | A115 | 200 |
| Example 11 | LA2140 | 140 | LA1114e | 60 | A115 | 200 |
| Example 12 | LA2140 | 160 | LA1114e | 40 | A115 | 200 |
| Example 13 | LA2140 | 180 | LA1114e | 20 | A115 | 200 |

In Table, A115 refers to rosin ester tackifier (Super Ester A115: ARAKAWA CHEMICAL INDUSTRIES, LTD.).
The pressure-sensitive adhesive in Examples 7 to 13 is used as a measurement sample, and initial tack is measured by the inclined ball tack method with an operation similar to that of Text example 2.
As a result, none of the steel balls used in the test is stopped.
From this fact, it is known that there is little initial tack in the pressure-sensitive adhesive in Examples 7 to 13. The adhesion of Example 13 is 7.5 N / 8.4 mm. The other pressure-sensitive adhesives also satisfy the numeral values in a range of claims.

### (Example 14) Preparation of pressure-sensitive adhesive

70 weight parts of styrene-isoprene block copolymer (Quintac 3421: Zeon Corporation) and 30 weight parts of terpene phenol resin tackifier (Tamanol 901: ARAKAWA CHEMICAL INDUSTRIES, LTD.) are solved in toluene and the pressure-sensitive adhesive is obtained by the same operation as that in Example 1.

### (Examples 15 to 21) Preparation of pressure-sensitive adhesive

The amount of polymer and the amount of tackifier described in Table 6 are processed similarly to Example 14 and the pressure-sensitive adhesive is obtained.

**Table 6**

| No. | Polymer | | Tackifier | |
|---|---|---|---|---|
| | Type | Quantity | Type | Quantity |
| Example 15 | SIS | 60 | Tamanol 901 | 40 |
| Example 16 | SIS | 50 | Tamanol 901 | 50 |
| Example 17 | SIS | 40 | Tamanol 901 | 60 |
| Example 18 | SIS | 90 | Quintone R100 | 10 |
| Example 19 | SIS | 90 | Super Ester A125 | 10 |
| Example 20 | SIS | 70 | Super Ester A125 | 30 |
| Example 21 | SIS | 50 | Super Ester A125 | 50 |

In Table, SIS is styrene-isoprene block copolymer (Quintac 3421).

A layer of pressure-sensitive adhesive is formed by the same method as in Test Example 1 using the toluene solution in Examples 14 to 21 to be the measurement sample of the initial tack (probe tack) and adhesion. The measurement result is shown in Table 7.

**Table 7**

| No. | Probe tack value | Peel strength |
|---|---|---|
| Example 14 | 0.00 | 21.3 |
| Example 15 | 0.00 | 23.2 |
| Example 16 | 0.00 | 28.2 |
| Example 17 | 0.00 | 32.2 |
| Example 18 | 0.04 | 6.7 |
| Example 19 | 0.02 | 11.4 |
| Example 20 | 0.04 | 23.7 |
| Example 21 | 0.01 | 28.6 |

The pressure-sensitive adhesive in Example 17 is used as a measurement sample, and initial tack is measured with an operation similar to that of Text examples 2 and 3. As a result, the inclined ball tack is 2 or less and the finger tack is 1.5.

### (Examples 22 to 23) Preparation of pressure-sensitive adhesive

The amount of polymer and the amount of tackifier described in Table 8 are processed similarly to Example 14 and the pressure-sensitive adhesive is obtained.

**Table 8**

| No. | Polymer | | Tackifier | |
|---|---|---|---|---|
| | Type | Quantity | Type | Quantity |
| Example 22 | Quintac 3421 | 100 | Escorez E-1315 | 150 |
| Example 23 | Quintac 3421 | 100 | Arkon P125 | 150 |

ion In Table Escorez E-1315 is a petroleum resin tackifier (by Exxon Mobile Corporation), and Arkon P125 is a hydrogenated petroleum resin: ARAKAWA CHEMICAL INDUSTRIES, LTD.).

The pressure-sensitive adhesive of Examples 22 to 23 is used to conduct a test similar to Text example 2. As a result, all the steel balls used in the test are not stopped.
From this fact, it is known that there is little initial tack in the pressure-sensitive adhesive in Examples 22 to 23. The adhesion also satisfies the numeral values in a range of claims (N / 8.4 mm).

### (Examples 24 to 27) Preparation of pressure-sensitive adhesive

The amount of polymer and the amount of tackifier described in Table 9 are processed similarly to Example 1 and the pressure-sensitive adhesive is obtained.

**Table 9**

| Example No. | Polymer | | Polymer | |
|---|---|---|---|---|
| | Type | Quantity | Type | Quantity |
| Example 24 | SK dyne 701 | 100 | Tamanol 901 | 67 |
| Example 25 | SK dyne 701 | 100 | Tamanol 901 | 43 |
| Example 26 | SK dyne 701 | 100 | Super Ester A-115 | 100 |
| Example 27 | SK dyne 701 | 100 | Super Ester A-115 | 67 |

In Table, SK-dyne is an acrylic adhesive (by Soken Chemical & Engineering Co.,Ltd.).

The pressure-sensitive adhesive in Example 24 to 27 is used as a measurement sample, and initial tack is measured by the inclined ball tack method with an operation similar to that of Text example 2.
As a result, all the steel balls used in the test are not stopped.
From this fact, it is known that there is little initial tack in the pressure-sensitive adhesive in Examples 24 to 27. The adhesion also satisfies the numeral values in a range of claims (N / 8.4 mm).

### (Text example 4) Measurement of change over time

100 weight parts of acrylic block copolymer mixture (LA2140), 100 weight parts of acrylic block copolymer (LA1114e) and 180 weight parts of rosin ester tackifier (A115) are solved in toluene and the pressure-sensitive adhesive is prepared by the operation similar to Example 1. A base material is placed on the pressure-sensitive adhesive surface, and 1-kg-roller is reciprocated and treated twice. Then, with the operation similar to Text Example 1, change in peel strength immediate after a predetermined time described in Table has elapsed is acquired. The result is shown in Table 10.

### (Text example 5) Measurement of change over time

100 weight parts of SK-dyne 701 and 67 weight parts of tackifier (Tamanol 901) are solved in toluene and manipulated similarly to Text example 4 after that, and change in the peel strength (N/8.4 mm) immediately after a predetermined time described in Table has elapsed is acquired.
The result is shown in Table 10

**Table 10**

| Peel strength value | | | | |
|---|---|---|---|---|
| No. | 1 minute elapsed | 3 minutes elapsed | 10 minutes elapsed | 30 minutes elapsed |
| Test Example 4 | 4.02 | 7.03 | 9.41 | 11.81 |
| Test Example 5 | 9.2 | 9.74 | 10.60 | 11.76 |

### (Comparative example 1)

The operation similar to Example 1 is conducted for an acrylic block polymer mixture (LA) and a resin film is obtained. This film is manipulated similarly to Text example 4 and change in the peel strength over time is acquired. As a result, a measurement value of the peel strength is still low even after 30 minutes elapsed.

### (Example 28)

The pressure-sensitive adhesive obtained in Examples 1, 2, 13 and transferred to a polyethyleneterephthalate film with the width of 8.4 mm is placed on a cotton cloth surface of a plate on which a cotton cloth is affixed on a stainless plate and a 1-kg-roller is reciprocated once. Then, the film is easily affixed. The adhesion strength after 3 minutes is 6.7 N / 8.4 mm.
The pressure-sensitive adhesive obtained in Examples 1, 2, 13 and transferred to a polyethyleneterephthalate film with the width of 8.4 mm is placed on a stainless plate and a cotton cloth is overlapped on its adhesion surface. When the 1-kg-roller is reciprocated once on the cotton cloth surface, the stainless plate and the cotton cloth affix to each other easily, and a laminated body is obtained. The adhesion strength after 3 minutes is 6.7 N / 8.4 mm, N / 8.4 mm, N / 8.4 mm, respectively.

### (Example 29)

The pressure-sensitive adhesive obtained in Example 7 and transferred to a polyethyleneterephthalate film with the width of 8.4 mm is placed on a surface of a bakelite plate and a 1-kg-roller is reciprocated once, and the film is easily affixed. Attempts are made to measure the adhesion strength after 3 minutes, but the adhesion strength is too high to be measured. Then a 0.5-kg-roller is used for reciprocation one and then, the film is easily affixed. The adhesion strength after 3 minutes is 11.4 N/ 8.4 mm. Adjustment is made so that the thickness of the pressure-sensitive adhesive becomes 120 µm.

The present invention is also an invention mentioned below.
(1) A resin composition having substantially no or extremely small initial tack and exerting adhesion by pressurization processing, essentially consisting of one or two kinds or more of polymer compound and a tackifier, wherein said polymer is selected from the polymer obtained by substantially polymerizing olefin unsaturated-group containing polymerizable monomer and natural rubber.
(2) A resin composition described in the above (1) characterized in that the polymer is one or two kinds or more selected from the group consisting of (metha)acrylic copolymer, hydrocarbon polymer and natural rubber.
(3) A resin composition described in the above (2) characterized in that the polymer is one or two kinds or more selected from the group consisting of (metha)acrylic copolymer, (metha)acrylic block copolymer, and hydrocarbon block copolymer.
(4) A resin composition described in the above (1) characterized in that the tackifier is one or two types or more selected from the group consisting of rosin, rosin derivatives, terpene resin, petroleum resin and terpene phenol resin.
(5) Use of the resin composition described in any one of the above (1) to (4) as a pressure-sensitive adhesive.
(6) An adhesive product or a laminate having a layer of pressure-sensitive adhesive available for affixation made of a resin composition described in any one of the above (1) to (4).

## Claims

1. A method for affixing an article provided with a pressure-sensitive adhesive layer on the surface, **characterized in that**
a pressure-sensitive adhesive layer provided on a surface of an arbitrary article is brought into contact with another article and pressed, wherein said pressure-sensitive adhesive is constituted at least by a polymer compound and a tackifier and said pressure-sensitive adhesive has substantially no or extremely small initial tack and exerts adhesion by pressurization processing.

2. A pressure-sensitive adhesive available for affixation constituted at least by one or two kinds or more of polymer compound and a tackifier, and said polymer is selected from a polymer obtained by polymerizing an olefin unsaturated-group containing polymerizable monomer and a natural rubber, wherein said pressure-sensitive adhesive has substantially no or extremely small initial tack, and exerting adhesion by pressurization processing.

3. A pressure-sensitive adhesive available for affixation constituted at least by a (metha)acrylic polymer and tackifier, the initial tack of the (metha)acrylic polymer at a room temperature by the probe tack method being 0.2 N/mm² or less and the adhesion being 9 N/25 mm or more.

4. A pressure-sensitive adhesive available for affixation constituted at least by a hydrocarbon polymer and tackifier, the initial tack by the probe tack method at a room temperature of the hydrocarbon polymer being 0.04 N/mm² or less and the adhesion being 6 N/25 mm or more.

5. The pressure-sensitive adhesive available for affixation according to claim 3, wherein the (metha) acrylic polymer is one or two kinds or more selected from (metha)acrylic block copolymer and (metha)acrylic copolymer.

6. The pressure-sensitive adhesive available for affixation according to claim 5, wherein the hydrocarbon polymer is a hydrocarbon block copolymer.

7. The pressure-sensitive adhesive available for affixation according to any one of claims 2 to 6, wherein the tackifier is one or two kinds or more selected from rosin resin, terpene resin, petroleum resin, and phenol resin.

8. A method for manufacturing a laminate comprising at least a step of providing a layer of the pressure-sensitive adhesive according to any one of claims 2 to 6 on a surface of an arbitrary article and a step of bringing the pressure-sensitive adhesive layer into contact with another article and pressurizing them.

9. A laminate **characterized by** having a pressure-sensitive adhesive layer according to any one of claims 2 to 6.

10. An adhesive product **characterized by** having a pressure-sensitive adhesive layer according to any one of claims 2 to 6.
